# EUROPÄISCHE PATENTSCHRIFT

(11) **EP 1 674 546 B1**
(45) Veröffentlichungstag und Bekanntmachung des Hinweises auf die Patenterteilung: **12.09.2007**
(21) Anmeldenummer: 05027147.7
(22) Anmeldetag: 13.12.2005
(51) Int. Cl.: C09J 175/06, C08G 18/18, C08G 18/76, C08G 18/10

(54) **Feuchthärtende Zusammensetzung und Schmelzklebstoff**
Moisture curable composition and hot melt adhesive
Composition réticulable à l'humidité et adhésif thermofusible

(30) Priorität: 24.12.2004 DE 102004062653
(43) Veröffentlichungstag der Anmeldung: 28.06.2006
(73) Patentinhaber: Bayer MaterialScience AG, 51368 Leverkusen (DE)
(72) Erfinder: Wintermantel, Matthias, Dr., 51061 Köln (DE); Meckel, Walter, Dr., 40627 Düsseldorf (DE); Ludewig, Michael, Dr., 51065 Köln (DE)

(56) Entgegenhaltungen:
- EP-A- 0 511 566
- EP-A- 0 668 302
- WO-A-20/04083296

## Beschreibung

Die Erfindung betrifft eine Zusammensetzung auf Basis alkoxysilanfunktioneller Polyurethan-Prepolymerer, geeignet für einen reaktiven Schmelzklebstoff, der bei hoher Temperatur lagerstabil ist, jedoch unter Einwirkung von Feuchtigkeit aus der Luft oder aus den miteinander verklebten Materialien sehr schnell aushärtet und der für das Verbinden unterschiedlichster Materialien geeignet ist. Die Erfindung betrifft auch das Verfahren zum Verkleben verschiedenster Substrate unter Verwendung des erfindungsgemäßen reaktiven Schmelzklebstoffs.

Es sind isocyanatfunktionelle reaktive Polyurethanklebstoffe (PUR-Schmelzklebstoffe) aus Prepolymeren bekannt, die durch Einwirkung von Feuchtigkeit aus der Luft oder den miteinander verklebten Materialien irreversibel aushärten (EP-B 455 400). Derartige Prepolymere sind spezielle Reaktionsprodukte aus Polyesterpolyolen und gegebenenfalls Polyetherpolyolen mit Polyisocyanaten. Diese reaktiven PUR-Schmelzklebstoffe sind universell anwendbar zum Verbinden sehr unterschiedlicher Materialien wie z. B. Kunststoff, Glas, Metall, Leder oder Holz.

Die Abbindezeiten von PUR-Schmelzklebstoffen, d.h. die Erstarrungszeiten ohne einsetzende Reaktion der Komponenten miteinander, lassen sich durch Modifizierung der Rezepturen mit bei Raumtemperatur kristallinen oder amorphen Komponenten im Bereich von Sekunden bis zu Minuten einstellen. Dabei bewirken die kristallinen Strukturen nicht nur eine niedrige Schmelzviskosität und ein schnelles Erstarren nach dem Auftrag, sondern auch aufgrund der niedrigen Glasübergangstemperatur eine gute Kälteelastizität (DE-A 3 827 224, DE-A 4 114 220, EP-A 0 354 527).

Zusätzlich können zur Modifikation der Eigenschaften auch bei Raumtemperatur flüssige Komponenten verwendet werden. So beschreibt die EP-A 0 340 906 reaktive Polyurethan-Hotmelts bestehend aus einer Mischung aus zwei Polyurethanprepolymeren, wobei das erste Prepolymer aus einem amorphen Polyol mit einer Glasübergangstemperatur > 20°C und das zweite Prepolymer aus einem bei Raumtemperatur flüssigen Polyol (T_{g} < 20°C) hergestellt wird.

Die eigentliche Aushärtung von reaktiven PUR-Schmelzklebstoffen, d.h. Vernetzungsreaktion der Komponenten miteinander, erfolgt innerhalb einiger Tage durch Reaktion der Isocyanatgruppen mit Wasser zu duroplastischem Polyharnstoff. Die PUR-Schmelzklebstoffe sind danach nicht mehr schmelzbar oder z.B. in Lösemitteln löslich. Aufgrund dessen haben die ausgehärteten Klebstoffe eine gute Wärmefestigkeit und Beständigkeit gegen Chemikalien wie Weichmacher, Lösemittel, Öle oder Kraftstoffe.

Ein Nachteil dieser Klebstoffe ist jedoch, dass sie bedingt durch ihren Herstellprozess einen hohen Anteil an freien monomeren Polyisocyanaten, wie z.B. 4,4'-Diisocyanatodiphenylmethan (4,4'-MDI) oder 2,4-Diisocyanatotoluol bzw. 2,6-Diisocyanatotoluol (TDI), aufweisen. Diese monomeren Polyisocyanate besitzen bei den Applikationstemperaturen der Klebstoffe von etwa 130°C bis etwa 180°C einen nicht unerheblichen Dampfdruck. Dies führt dazu, dass die monomeren Bestandteile gasförmig in die Umgebung entweichen. Aufgrund dieser Isocyanatemissionen müssen entsprechende arbeitshygienische Maßnahmen, wie z.B. Installation von geeigneten Absaugvorrichtungen, ergriffen werden.

Ein weiterer Nachteil dieser Klebstoffe ist das Ausgasen von Kohlendioxid bei der Reaktion mit Wasser zu Polyharnstoff. Der Klebstoff kann dadurch in der Klebefuge aufschäumen und die gewünschte Position der Fügeteile kann sich verändern.

Um die oben genannten Nachteile zu überwinden, werden in der Literatur auf Polyesterpolyolen basierende silanfunktionelle reaktive Schmelzklebstoffe beschrieben.

So offenbart die EP-A 0 202 491 feuchtigkeitshärtende Schmelzkleber die in einer ersten Ausführungsform erhältlich sind durch Reaktion von Polyestergemischen mit festen Polyesteranteilen mit Glasübergangstemperaturen oberhalb 10°C und flüssigen Polyestern mit Glasübergangstemperaturen unter -10°C mit einem Überschuss an Polyisocyanaten und anschließender Umsetzung der so erhaltenen freie NCO-Gruppen aufweisenden Prepolymeren mit Amino- oder Mercaptosilanen. In einer zweiten Ausführungsform wird zuerst ein Addukt aus einem Amino- oder Mercaptosilan mit einem Diisocyanat hergestellt. Wobei die beiden Komponenten im Molverhältnis 1 : 1 umgesetzt werden. In einem zweiten Schritt erfolgt dann die Umsetzung dieses Additionsprodukts mit dem Polyestergemisch. Der Zusatz von Katalysatoren zur Beschleunigung der Aushärtungsreaktion mit Feuchtigkeit wird nicht beschrieben. Allerdings wird in allen Durchführungsbeispielen zur Herstellung der Schmelzkleber Dibutylzinndilaurat (DBTL) als Katalysator eingesetzt. Das DBTL wird nach beendeter Reaktion nicht deaktiviert und verbleibt im Produkt wo es prinzipiell als Aushärtungskatalysator wirken kann. Die so hergestellten Schmelzkleber sollen bereits bei Raumtemperatur mit Luftfeuchtigkeit aushärten.

Die EP-A 0 354 472 beschreibt alkoxysilanterminierte, feuchtigkeitsvemetzende Schmelzkleber erhältlich durch Umsetzung von a) NCO-terminierten Silanverbindungen herstellbar durch Reaktion von Amino- oder Mercaptosilanen mit Diisocyanaten und linearen Alkylendiolen mit 2 bis 12 Kohlenstoffatomen und b) linearen OH- und/oder NH₂-terminierten difunktionellen Polymeren erhältlich durch Umsetzung eines Überschusses von linearen OH- und/oder NH₂-terminierten Polyestern, Polyethern und/oder Polyurethanen mit Diisocyanaten. Zur Beschleunigung der Vernetzungsreaktion mit Feuchtigkeit werden die üblichen sauren Katalysatoren genannt, die z.B. aus der von Zinn-II-octoat, Dibutylzinn-dilaurat, Tetrabutyl-titanat, Zinkacetat und Zinkacetylacetonat oder dergleichen gebildeten Gruppe ausgewählt sind.

Die in den beiden o.g. Offenlegungsschriften beschriebenen Schmelzklebstoffe haben allerdings bis heute keine technische Anwendung erlangt, da die Alkoxysilan-Endgruppen aufgrund ihrer im Vergleich zu Isocyanat-Endgruppen deutlich verringerten Reaktivität mit Feuchtigkeit ohne Zusatz eines Katalysators nicht oder nur unzureichend über einen sehr langen Zeitraum aushärten und somit nur unzureichende Festigkeiten aufbauen. Setzt man die genannten Lewis-Säuren als Katalysatoren zu, so verlieren die Zusammensetzungen ihre Stabilität bei Wärmelagerung, da die genannten Katalysatoren auch die Umesterung der in den Prepolymeren vorhandenen Polyesterbausteine mit den aus den Alkoxyendgruppen abgespaltenen niedermolekularen Alkoholen, wie z.B. Methanol oder Ethanol katalysieren. Dies führt zu einem irreversiblen Abbau der Polymerkette und damit zu einer Zerstörung des Klebstoffs. Da die Schmelzklebstoffe zur Applikation in Heizöfen aufgeschmolzen und über einen längeren Zeitraum, in der Regel mindestens einen Arbeitstag, bei erhöhter Temperatur im flüssigen Zustand gehalten werden ist eine ausreichende Stabilität bei hohen Temperaturen zur technischen Anwendung aber zwingend erforderlich.

Auch die beschriebene Vorgehensweise in einem ersten Schritt ein Addukt aus Diisocyanat und Aminosilan herzustellen stellt einen erheblichen technischen Nachteil dar, da sich immer auch das Diaddukt aus zwei Molekülen Aminosilan und Diisocyanat bilden wird und so teures Aminosilan verloren geht.

Die EP-A 0 480 363 beschreibt eine aushärtbare Zusammensetzung mit mindestens zwei hydrolysierbaren Silylgruppen erhältlich durch Umsetzung von aliphatischen Polyestern die eine Hydroxyl- und eine Acryloylgruppe im Molekül enthalten mit einem Isocyanatosilan, anschließende Reaktion des Umsetzungsprodukts mit einem Aminosilan und anschließende Umsetzung des Reaktionsprodukts mit einem monofuktionellen Isocyanat und/oder mit einem Polyisocyanat. Als Katalysatoren zur Aushärtung der Zusammensetzung werden Organozinn-Verbindungen wie z.B. Dibutylzinndilaurat oder Zinnoctoat, saure Verbindungen wie z.B. p-Toluolsulfonsäure oder Phosphorsäureester sowie Amine wie Ethylendiamin, Isophorondiamin oder N,N-dimethyldodecylamin genannt.

Die oben genannten Zusammensetzungen sind nur durch ein aufwendiges mehrstufiges Herstellverfahren zugänglich und deshalb sehr teuer. Ausserdem handelt es sind bei den als Ausgangsprodukt benötigten Polyestern mit Hydroxyl- und Acryloylgruppe im Molekül nicht um Standardprodukte wie sie z.B. zur Herstellung reaktiver PUR-Hotmelts in vielfältiger Form zur Verfügung stehen, sondern sind nur sehr eingeschränkt erhältlich. Dadurch ist es nur bedingt möglich durch Mischung von amorphen, flüssigen und kristallinen Polyestern mit entsprechenden Endgruppen die Eigenschaften der Schmelzkleber gezielt zu beeinflussen. Bezüglich der Lagerstabilität in der Wärme bei Verwendung der genannten lewis-sauren Katalysatoren gilt das bereits oben ausgeführte.

Die EP-A 0 096 250 offenbart vernetzbare, bei Temperaturen unter 100°C flüssige Zusammensetzungen auf der Basis hydroxylgruppenhaltiger Polymere bei denen die Hydroxylgruppen nur partiell durch Alkoxysilyl-Endgruppen ersetzt sind. Besonders geeignete hydroxylgruppenhaltige Polymere sind unter anderem Polyesterpolyole. Die Herstellung erfolgt in einer mehrstufigen Synthese. In einer ersten Ausführungsform wird zuerst ein Addukt aus einem Amino- oder Mercaptosilan mit einem Diisocyanat hergestellt. Wobei die beiden Komponenten im Molverhältnis 1 : 1 umgesetzt werden. In einem zweiten Schritt erfolgt dann die Umsetzung dieses Additionsprodukts mit dem Polyolgemisch in solcher Menge, dass das Verhältnis OH/NCO kleiner als 1:0,9 ist. In einer zweiten Ausführungsform erfolgt im ersten Schritt die Reaktion eines OH-haltigen Polymers oder einer Polymermischung mit einem Überschuss an Diisocyanat und anschließender Umsetzung der so erhaltenen freie NCO-Gruppen aufweisenden Prepolymeren mit Amino- oder Mercaptosilanen. In einem dritten Schritt erfolgt dann die Mischung des erhaltenen Produkts der Stufe 2 mit OH-haltigen Polymeren. Als geeignete Aushärtungskatalysatoren werden neben Zinn- und Titanverbindungen auch Amine genannt, in den Ausführungsbeispielen jedoch nur DBTL verwendet. Diese Zusammensetzungen sind allerdings nicht nur durch Zutritt von Feuchtigkeit sondern auch durch Temperaturanwendung aushärtbar.

Diese Wärmehärtung stellt einen erheblichen technischen Nachteil dar, da die Schmelzklebstoffe zur Applikation in Heizöfen aufgeschmolzen und über einen längeren Zeitraum, in der Regel mindestens einen Arbeitstag, bei erhöhter Temperatur im flüssigen Zustand gehalten werden. Diese Bedingungen führen jedoch zu einer, zumindest teilweisen, Vernetzung des Klebstoffs wodurch dieser unbrauchbar wird. Außerdem ist auch hier ein aufwendiges mehrstufiges Verfahren zur Herstellung des offenbarten Schmelzklebers nötig. Die Addukte aus aromatischen Isocyanaten, wie z.B. MDI oder TDI und Aminosilanen sind zusätzlich nicht lagerstabil und müssen deshalb direkt weiter umgesetzt werden, was die Synthese zusätzlich erschwert. Solche aromatischen Diisocyanate sind aber aufgrund ihrer im Vergleich zu den aliphatischen Diisocyanaten erheblich größeren Reaktivität für die Anwendung in Schmelzklebstoffen bevorzugt.

Die WO 2004/005420 beschreibt feuchtehärtende Schmelzklebstoffe die hergestellt werden aus einem semikristallinen Polyol, einem im wesentlichen amorphen Polyol mit entweder verzweigten primären OH-Gruppen oder sekundären OH-Gruppen oder Mischungen davon, einem Aminosilan mit sekundären Aminogruppen, einem Isocyanat und die aus ökologischen Gründen im wesentlichen Zinn frei sind.

Außerdem wird eine Methode zur Herstellung dieser feuchtehärtenden Schmelzklebstoffe beschrieben. Dabei wird in einem ersten Schritt ein Prepolymer aus einem semikristallinen Polyol, einem im wesentlichen amorphen Polyol mit entweder verzweigten primären OH-Gruppen oder sekundären OH-Gruppen oder Mischungen davon und einem Isocyanat hergestellt. Gegebenenfalls kann dabei ein Zinn freier Katalysator verwendet werden. Als Beispiel für einen Zinn freien Katalysator wird 2,2'-Dimorpholinodiethylether (DMDEE) genannt. In einem zweiten Schritt wird das Prepolymer dann mit einem Aminosilan mit sekundärer Aminogruppe zu dem feuchtehärtenden Schmelzklebstoff umgesetzt. Dabei sollen beide Reaktionsschritte ohne den Zusatz eines zinnhaltigen Katalysators durchgeführt werden. Als Amionsilane mit sekundärer Aminogruppe werden N-Alkyl-aminoalkyl-alkoxysilane verwendet. Zusätzlich kann dem fertigen Schmelzklebstoff noch ein Katalysator zugemischt werden, der die Aushärtung mit Feuchtigkeit beschleunigt. Beispielhaft werden tertitäre Amine genannt. In den die Erfmdung erläuternden Beispielen wird zur Herstellung der Prepolymere, d.h. bei der Umsetzung der Polyole mit dem Isocyanat, DMDEE als Katalysator verwendet. Dem fertigen Schmelzklebstoff wird jedoch kein weiterer Aushärtungskatalysator zugemischt. Da das DMDEE aber in dem Schmelzklebstoff verbleibt, wirkt es natürlich auch als Katalysator bei der Aushärtung mit Feuchtigkeit. Die Beispiele und Vergleichsbeispiele zeigen eindeutig, dass bei der Verwendung von DMDEE nur dann Klebverbindungen mit ausreichender Endfestigkeit erreicht werden, wenn die zur Herstellung des Prepolymeren verwendete Polyolmischung Polyetherpolyole mit sekundären OH-Gruppen oder amorphe Polyester die Verzweigungen entlang der Hauptkette aufweisen enthält. Die verschiedenen Vergleichsbeispiele (z.B. Vergleichsbeispiel 2) zeigen, dass bei der ausschließlichen Verwendung von kristallinen oder unverzweigten Polyesterpolyolen die DMDEE katalysierten Schmelzklebstoffe mit Werten von ≤ ca. 4 MPa nach 24h Aushärtung nur völlig unzureichende Endfestigkeiten aufbauen. Diese Werte sind signifikant geringer als die Endfestigkeiten die die Polyetherpolyole enthaltenden Produkte aufweisen (ca. 9 bis 12 MPa nach 24 h Aushärtung). Die Verwendung von Polyetherpolyolen mit sekundären OH-Gruppen ist aber nicht in jedem Fall gewünscht, da sie die Klebeigenschaften unter Umständen negativ beeinflussen.

Dichtstoffe auf Basis alkoxysilanterminierter Polyetherpolyole sind seit langem bekannt (EP-A 0 596 360 und WO 00/26271). Dort werden neben metallorganischen Aushärtungskatalysatoren wie z.B. Dibutylzinndilaurat auch stark basische bicyclische tertiäre Amine als Katalysatoren des Stands der Technik eingesetzt. So beschreibt die JP 08283366 1,8-Diazabicyclo[5.4.0]-undec-7-en (DBU) und 1,5-Diazabicyclo[4.3.0]non-5-en (DBN) als besonders geeignet. Andere tertiäre Amine sind nach dieser Offenlegungsschrift hingegen nicht sonderlich geeignete Aushärtungskatalysatoren, da sich mit ihnen nur extrem lange Aushärtungszeiten erzielen lassen. Insbesondere wird die Verbindung Bis-(N,N'-dimethylaminoethyl)ether (Katalysator A-1) als negatives Vergleichsbeispiel angeführt und dieser Katalysator als ungeeignet zur Beschleunigung der Aushärtungsreaktion der alkoxysilanterminierten Polyurethan-Prepolymere mit Feuchtigkeit bezeichnet.

Stark basische bicyclische tertiäre Amine wie 1,8-Diazabicyclo[5.4.0]-undec-7-en (DBU) und 1,5-Diazabicyclo[4.3.0]non-5-en (DBN) sind allerdings im Fall von alkoxyterminierten Schmelzklebem auf Basis von Polyesterpolyolen als Aushärtungskatalysatoren nicht brauchbar, da sie bei Wärmeeinwirkung, z.B. während des Aufschmelzvorgangs, zu einem irreversiblen Abbau der Polyesterbausteine des Klebstoffs und damit zu dessen Zerstörung führen.

Aus dem Stand der Technik wird ersichtlich, dass weiterhin Bedarf an lagerstabilen und mit Feuchtigkeit sehr schnell aushärtenden Polyester basierten alkoxysilanfunktionellen Schmelzklebstoffen besteht, die nach der vollständigen Aushärtung mit Feuchtigkeit hohe Festigkeiten aufweisen.

Aufgabe der vorliegenden Erfindung war es deshalb feuchtehärtende alkoxysilanfunktionelle Schmelzklebstoffe zur Verfügung zu stellen, die einfach herstellbar sind, eine gute Lagerstabilität bei Wärmelagerung aufweisen und trotzdem beim Zutritt von Feuchtigkeit sehr schnell aushärten und nach Aushärtung zu hohen Festigkeiten führen.

Diese Aufgabe konnte mit der Bereitstellung der nachstehend näher beschriebenen Alkoxysilan-Endgruppen aufweisenden Zusammensetzungen und Schmelzklebstoffen gelöst werden.

Es wurde nämlich überraschend gefunden, dass Polyester basierte Alkoxysilan-Endgruppen aufweisende Zusammensetzungen und Schmelzklebstoffe die den Katalysator Bis-(N,N'-dimethylaminoethyl)ether (Katalysator A-1) enthalten eine ausgezeichnete Lagerstabilität aufweisen, mit Feuchtigkeit sehr schnell aushärten und zudem Klebverbindungen mit sehr hohen Endfestigkeiten ergeben.

Gegenstand der Erfindung sind also für Schmelzklebstoffe geeignete, feuchtehärtende alkoxysilanfunktionelle Zusammensetzungen erhältlich durch Umsetzung von
A) Polyurethanprepolymeren, erhältlich durch Umsetzung von
   i) mindestens einem aromatischen, aliphatischen, araliphatischen und/oder cycloaliphatischen Diisocyanat, bevorzugt mit einem Gehalt an freien NCO-Gruppen von 5 bis 60 Gew.-%
      mit
   ii) einer Polyolkomponente enthaltend mindestens ein lineares bei Raumptemperatur festes, vorzugsweise zumindest teilkristallines Polyesterpolyol und gegebenenfalls zusätzlich ein oder mehrere amorphe, lineare Polyesterpolyole und/oder ein oder mehrere bei Raumtemperatur flüssige, lineare Polyesterpolyole und gegebenenfalls ein oder mehrere lineare Polyetherpolyole
   wobei das Verhältnis von i) zu ii) so gewählt wird, dass das molare Verhältnis von NCO zu OH von 1,2 bis 4,0, vorzugsweise von 1,3 bis 3,0 beträgt
   mit
B) Alkoxysilan- und Amino- oder Mercaptogruppen aufweisenden Verbindungen der allgemeinen Formel (I) 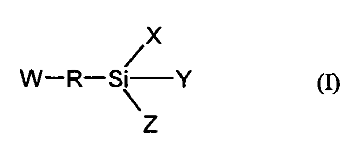 in welcher
   - X, Y, Z: für gleiche oder verschiedene geradkettige oder verzweigte (C₁-C₈)Alkylreste oder cyclische (C₃-C₈)Alkylreste oder (C₁-C₈)Alkoxyreste stehen, mit der Maßgabe, dass mindestens einer der Reste für eine (C₁-C₈)Alkoxyrest ist,
   - R: für geradkettige oder verzweigte Alkylenreste mit 1 bis 8 Kohlenstoffatomen, vorzugsweise 1 bis 4 Kohlenstoffatomen oder cyclische Alkylenreste mit 3 bis 8 Kohlenstoffatomen steht,
   - W: entweder für -SH oder für NH-R' steht,
   wobei
   R' für Wasserstoff, geradkettige oder verzweigte Alkylreste mit 1 bis 8 Kohlenstoffatomen, vorzugsweise 1 bis 4 Kohlenstoffatomen oder cyclische Alkylreste mit 3 bis 8 Kohlenstoffatomen oder Arylreste oder Reste der allgemeinen Formel (II) steht, 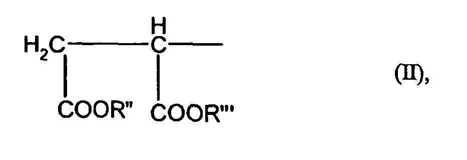 wobei
   R" und R"' für gleiche oder verschiedene, geradkettige oder verzweigte Alkylreste mit 1 bis 8 Kohlenstoffatomen, vorzugsweise 1 bis 4 Kohlenstoffatomen oder cyclische Alkylreste mit 3 bis 8 Kohlenstoffatomen stehen wobei
   in Formel (I) X, Y und Z vorzugsweise unabhängig voneinander für Methoxy oder Ethoxy, W vorzugsweise für NH-R' und R' vorzugsweise für einen Rest der allgemeinen Formel (II) stehen
   wobei das Mengenverhältnis von A) zu B) so gewählt wird, dass pro Mol NCO-gruppen aus A) 0,95 bis 1,1 Mol Amin- oder Mercaptogruppen aus B) eingesetzt werden, und Zugabe von
C) Bis-(N,N'-dimethylaminoethyl)ether (Katalysator A-1) zur Katalyse der Vernetzungsreaktion der Alkoxysilan-Endgruppen beim Zutritt von Feuchtigkeit aus der Umgebung oder aus den miteinander verklebten Substraten (Aushärtungskatalysator).

Gegenstand der Erfindung sind auch Schmelzklebstoffe, welche die erfindungsgemäßen Zusammensetzungen enthalten, bzw. die Verwendung der erfindungsgemäßen Zusammensetzungen als Klebstoffe, insbesondere Schmelzklebstoffe, oder zu deren Herstellung.

Gegenstand der Erfindung sind auch unter Verwendung der erfindungsgemäßen Zusammensetzungen und Schmelzklebstoffe verklebte Substrate.

Der hier und im Folgenden verwendete Ausdruck "Raumtemperatur" soll eine Temperatur von 25°C bezeichnen.

Die erfindungsgemäß einzusetzenden Isocyanatprepolymere A) werden in der aus der Polyurethan-chemie an sich bekannten Art und Weise, beispielsweise durch Umsetzung einer nachstehend näher beschriebenen Diisocyanatkomponente i) mit freien NCO-Gruppen mit einer nachstehend näher charakterisierten Polyolkomponente ii) hergestellt.

Als Diisocyanatkomponente i) geeignete Diisocyanate sind beispielsweise solche mit Isocyanatgehalten von 5 bis 60 Gew.-% (bezogen auf das Diisocyanat) mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-DÜsocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norboman, 1,3- und 1,4-Bis-(2-isocyanato-prop-2-yl)-benzol (TMXDI), 2,4- und/oder 2,6-Diisocyanatotoluol (TDI), 2,2'-, 2,4'- und/oder 4,4'-Diisocyanatodiphenylmethan (MDI), 1,5-Diisocyanatonaphthalin, 1,3- und 1,4-Bis-(isocyanatomethyl)-benzol.

Als Diiscocyanatkomponente i) bevorzugte Diisocyanate sind 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI), 2,2'-, 2,4'- und/oder 4,4'-Diisocyanatodiphenylmethan (MDI).

Zur Herstellung der Polyurethanprepolymere A) wird die Diisocyanatkomponente i) mit einer Polyolkomponente ii) so umgesetzt, dass das molare Verhältnis von NCO-Gruppen zu OH-Gruppen von 1,2 bis 4,0, vorzugsweise von 1,3 bis 3,0 beträgt.

Unter einem Polyesterpolyol als Polyolkomponente ii) wird im Rahmen der vorliegenden Erfindung ein Polyester mit mehr als einer OH-Gruppe, bevorzugt zwei endständigen OH-Gruppen verstanden. Solche Polyester sind dem Fachmann bekannt. Sie können auf bekanntem Wege hergestellt werden, beispielsweise aus aliphatischen Hydroxycarbonsäuren oder aus aliphatischen und/oder aromatischen Dicarbonsäuren und einem oder mehreren Diolen. Als Ausgangsmaterialien können auch entsprechende Derivate eingesetzt werden, wie z.B. Lactone, Ester von niederen Alkoholen oder Anhydride. Beispiele für geeignete Ausgangsprodukte sind Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure, Phthalsäureanhydrid, Ethylenglykol, Diethylenglykol, 1,4-Butandiol, 1,6-Hexandiol, Neopentylglykol, ε-Caprolacton.

Geeignete teilkristalline, amorphe und flüssige Polyesterpolyole weisen Molekulargewichte von 500 g/mol bis 10000 g/mol auf. Bevorzugt weisen die Polyesterpolyole Molekulargewichte von 1000 g/mol bis 8000 g/mol auf und besonders bevorzugt weisen die Polyesterpolyole Molekulargewichte von 1500 g/mol und 6500 g/mol auf.

Polyesterpolyole sind bei Raumtemperatur entweder flüssig (Glasübergangstemperatur Tg < 20°C) oder fest. Bei Raumtemperatur feste Polyesterpolyole sind dabei entweder amorph (Glasübergangstemperatur Tg > 20°C) oder zumindest teilkristallin.

Die erfmdungsgemäßen feuchtehärtenden alkoxysilanfunktionellen Zusammensetzungen und Schmelzklebstoffe enthalten in ihrer Polyolkomponente ii) mindestens ein mindestens bifunktionelles bei Raumtemperatur festes, vorzugsweise zumindest teilkristallines Polyesterpolyol.

Gegebenfalls enthalten sie in ihrer Polyolkomponente ii) weiterhin ein oder mehrere mindestens bifunktionelle zumindest teilkristalline Polyesterpolyole und/oder ein oder mehrere mindestens bifunktionelle amorphe Polyesterpolyole und/oder ein oder mehrere mindestens bifunktionelle bei Raumtemperatur flüssige Polyesterpolyole sowie gegebenenfalls ein oder mehrere mindestens bifunktionelle Polyetherpolyole.

Unter "zumindest teilkristallin" ist zu verstehen, dass die Polyesterpolyole nicht vollständig kristallin vorliegen, sondern auch noch einen gewissen amorphen Anteil aufweisen. Sie sind kristallisierend und weisen einen kristallinen Schmelzpunkt (Tm) und eine Glasübergangstemperatur (Tg) auf. Der Schmelzpunkt gibt die Temperatur an, bei der die kristallinen Anteile des Materials schmelzen. Er kann beispielsweise differential-thermoanalytisch mittels einer DSC-Messung als Endotherm-Hauptpeak (kristalliner Schmelzpeak) bestimmt werden. Der Schmelzpunkt der zumindest teilkristallinen Polyesterpolyole liegt beispielsweise im Bereich von etwa 35°C bis etwa 120°C, bestimmt mittes DSC bei der zweiten Aufheizung mit einer Heiz- und Kühlrate von 10 K/min. Die Glasübergangstemperatur der zumindest teilkristallinen Polyesterpolyole liegt im allgemeinen beispielsweise bis zu weit unter der Raumtemperatur. Geeignete teilkristalline Polyesterpolyole sind dem Fachmann bekannt.

Geeignete zumindest teilkristalline, d.h. kristallisierende, Polyesterpolyole sind beispielsweise solche auf Basis linearer aliphatischer Dicarbonsäuren mit 6 bis 12 Kohlenstoffatomen im Molekül wie z.B. Adipinsäure, Azelainsäure, Sebacinsäure und Dodecandisäure, vorzugsweise Adipinsäure und Dodecandisäure und linearen Diolen mit 4 bis 8 Kohlenstoffatom im Molekül, vorzugsweise mit einer geraden Anzahl von Kohlenstoffatomen wie beispielsweise 1,4-Butandiol und 1,6-Hexandiol. Ebenso sind die Polycaprolactonderivate basierend auf bifunktionellen Startmolekülen wie beispielsweise 1,6-Hexandiol als besonders geeignet zu nennen.

Geeignete amorphe Polyesterpolyole sind beispielsweise solche auf Basis von Adipinsäure, Isophthalsäure, Terephthalsäure, Ethylenglykol, Neopentylglykol und 3-Hydroxy-2,2-dimethylpropyl-3-hydroxy-2,2-dimethylpropanoat.

Geeignete bei Raumtemperatur flüssige Polyesterpolyole sind beispielsweise solche auf Basis von Adipinsäure, Ethylenglykol, 1,6-Hexandiol und Neopentylglykol.

Als Polyetherpolyol geeignet sind die in der Polyurethan-Chemie üblichen Polyether, wie beispielsweise die unter Verwendung von zwei- bis sechswertigen Startermolekülen wie beispielsweise Wasser, Ethylenglykol, 1,2- oder 1,3-Propylenglykol, Bisphenol-A, Neopentylglykol, Glycerin, Trimethylolpropan, Pentaerythrit, Sorbit oder 1- bis 4-NH-Bindungen aufweisenden Aminen hergestellten Additions- oder Mischadditionsverbindungen des Tetrahydrofurans, Styroloxids, Ethylenoxids, Propylenoxids, der Butylenoxide oder des Epichlorhydrins, vorzugsweise des Ethylenoxids und/oder des Propylenoxids. Vorzugsweise sind die bifunktionellen Propylenoxid-und/oder Ethylenoxid-Addukte sowie Polytetrahydrofuran zu nennen. Solche Polyetherpolyole und ihre Herstellung sind dem Fachmann bekannt.

Die geeigneten Polyetherpolyole weisen Molekulargewichte von 300 g/mol bis 20000 g/mol auf. Bevorzugt weisen die Polyetherpolyole Molekulargewichte von 500 g/mol bis 15000 g/mol und besonders bevorzugt von 500 g/mol bis 10000 g/mol auf.

In den erfindungsgemäßen Zusammensetzungen können ein oder mehrere verschiedene Polyesterpolyole zumindest teilkristalliner oder amorpher sowie flüssiger Natur eingesetzt werden. Die quantitative Zusammensetzung des Polyols kann vom Fachmann je nach dem gewünschten Eigenschaftsprofil ermittelt werden und unterliegt keinen speziellen Grenzen. Zumindest teilkristallines, festes Polyesterpolyol und festes amorphes Polyesterpolyol können bis zu 100 Gew.-%, jeweils bezogen auf das Gesamtgewicht der Polyolkomponente, betragen. Bevorzugt liegt der Anteil von bei Raumtemperatur festem, zumindest teilkristallinem Polyesterpolyol bei 10 bis 100 Gew.-%, der Anteil an festem amorphem Polyesterpolyol liegt beispielsweise bei 0 bis 70 Gew.-% und der Anteil an bei Raumtemperatur flüssigem Polyesterpolyol liegt beispielsweise bei 0 bis 70 Gew.-%, jeweils bezogen auf das Gesamtgewicht der Polyolkomponente. Der Anteil an Polyetherpolyol kann beispielsweise 0 bis 50 Gew.-%, bezogen auf das Gesamtgewicht der Polyolkomponente betragen.

Die Herstellung der Polyurethanprepolymere A) erfolgt beispielsweise derart, dass, beim Einsatz von bei Reaktionstemperaturen flüssigen Polyole, diese mit einem Überschuss der Polyisocyanate vermischt werden und die homogene Mischung bis zum Erhalt eines konstanten NCO-Wertes, der meist nach 30 Minuten bis zwei Stunden erreicht wird, gerührt wird. Als Reaktionstemperatur werden 80°C bis 150°C, vorzugsweise 100°C bis 130°C gewählt. Selbstverständlich kann die Herstellung der Polyurethanprepolymere A) auch kontinuierlich in einer Rührkesselkaskade oder geeigneten Mischaggregaten, wie beispielsweise schnelldrehenden Mischern nach dem Rotor-Stator-Prinzip, erfolgen.

Es ist selbstverständlich möglich, die Polyester- und/oder Polyetherpolyole oder einen Teil derselben mit einem Unterschuss an Diisocyanaten, vorzugsweise 1,6-Diisocyanatohexan (HDI), 2,4- und/oder 2,6-Diisocyanatotoluol (TDI) und/oder 2,4'- und/oder 4,4'-Diisocyanatodiphenylmethan (MDI), zu modifizieren und nach beendeter Reaktion die urethangruppenhaltigen Polyole mit einem Überschuss von Diisocyanaten zu dem Polyurethanprepolymeren A) umzusetzen.

Ebenso ist es möglich, die Umsetzung der Polyole mit den Diisocyanaten in Gegenwart von bis zu 5 Gew.-% von beispielsweise Trimerisaten aliphatischer Diisocyanate, wie beispielsweise Hexamethylendiisocyanat, durchzuführen oder solche Trimerisate nach beendeter Prepolymerisierung zuzusetzen.

Die erfindungsgemäß einsetzbaren Polyurethanprepolymere A) werden in der zweiten Stufe des erfmdungsgemäßen Verfahrens umgesetzt mit den vorstehend definierten Verbindungen B) der Formel (I).

Beispiele für geeignete Verbindungen B) der allgemeinen Formel (I) sind gamma-Aminopropyltrimethoxysilan, gamma-Aminopropyltriethoxysilan, N-Butyl-gamma-aminopropyltrimethoxysilan, N-Propyl-gamma-aminopropyltrimethoxysilan, N-Phenyl-gamma-aminopropyltrimethoxysilan, 4-Amino-3,3-dimethyl-butyl-trimethoxysilan, 4-Amino-3,3-dimethyl-butyl-methyldimethoxysilan, gamma-Mercaptopropyltrimethoxysilan und gamma-Mercaptopropyltriethoxysilan.

Bevorzugt wird eine Verbindung B) der allgemeinen Formel (I) eingesetzt, die Alkoxysilan- und Aminogruppen aufweist, d.h. deren Rest W einer -NH-R' Gruppe entspricht, wobei der Rest R' vorzugsweise der allgemeinen Formel (II) entspricht. Die Herstellung einer solchen Verbindung erfolgt wie beispielsweise in der EP-A 0 596 360 beschrieben.

Als konkrete Beispiele für solche bevorzugten Verbindungen B) seien genannt N-(3-Triethoxysilylpropyl)asparaginsäurediethylester, N-(3-Triethoxysilylpropyl)asparaginsäure-dimethylester, N-(3-Triethoxysilylpropyl)asparaginsäuredi-n-butylester, N-(3-Trimethoxysilyl-propyl)asparaginsäuredimethylester, N-(3-Trimethoxysilylpropyl)asparaginsäure-diethylester.

Die Umsetzung der NCO-Prepolymeren mit den Alkoxysilan- und Amino- oder Mercaptogruppen aufweisenden Verbindungen der Formel (I) im erfindungsgemäßen Verfahren erfolgt beispielsweise innerhalb eines Temperaturbereichs von 80°C bis 150°C, vorzugsweise 100°C bis 130°C, wobei die Mengenverhältnisse in der Regel so gewählt werden, dass pro Mol eingesetzter NCO-Gruppen 0,95 bis 1,1 Mol Amino- oder Mercaptosilanverbindung eingesetzt werden. Vorzugsweise wird pro Mol eingesetzter NCO-Gruppen 1 Mol Amino- oder Mercaptosilanverbindung eingesetzt.

Verwendet man Aspartate als Alkoxysilan- und Aminogruppen aufweisenden Verbindungen der Formel (I) kann es bei Anwendung höherer Reaktionstemperaturen gemäß der Lehre der EP-A 0 807 649 zu einer Cyclokondensationsreaktion kommen, die aber keineswegs störend ist und mitunter sogar vorteilhaft sein kann.

Zu den erfindungsgemäß einsetzbaren Alkoxysilan-Endgruppen aufweisenden Polyurethan-Prepolymeren wird Bis-(N,N'-dimethylaminoethyl)ether (Katalysator A-1) als Katalysator für die Aushärtungsreaktion der erfindungsgemäßen Schmelzklebstoffe mit Feuchtigkeit aus der Umgebung oder aus den miteinander verklebten Substraten zugegeben. Die Zugabe kann anschließend an die Herstellung des Alkoxysilan-Endgruppen aufweisenden Polyurethanprepolymeren als nächster Verfahrensschritt erfolgen. Gegebenenfalls kann der als Katalysator wirkende Bis-(N,N'-dimethylaminoethyl)ether (Katalysator A-1) auch schon zu einem früheren Zeitpunkt, z.B. bei der Herstellung der Prepolymere A) hinzugegeben werden, was allerdings nicht bevorzugt ist.

Der Katalysator wird beispielsweise in einer Menge von 0,1 Gew.-% bis 1,5 Gew.-%, bezogen auf das Alkoxysilan-Endgruppen aufweisenden Polyurethan-Prepolymer, eingesetzt.

Bevorzugt wird der Katalysator in einer Menge von 0,2 Gew.-% bis 1,0 Gew.-%, bezogen auf das Alkoxysilan-Endgruppen aufweisenden Polyurethan-Prepolymer, eingesetzt.

Besonders bevorzugt wird der Katalysator in einer Menge von 0,25 Gew.-% bis 0,8 Gew.-%, bezogen auf das Alkoxysilan-Endgruppen aufweisenden Polyurethan-Prepolymer, eingesetzt.

Die erfindungsgemäßen alkoxysilanfunktionellen Schmelzklebstoffe können zusätzlich ein oder mehrere für Schmelzklebsoffe übliche Additive enthalten. Beispielsweise können sie mit anorganischen oder organischen Füllstoffen, Farbstoffen, Harzen und/oder Streckölen in üblicher Weise modifiziert werden.

Weiterhin können den erfindungsgemäßen alkoxysilanfunktionellen Schmelzklebstoffen Trockenmittel zugesetzt werden, als Beispiele seien insbesondere Alkoxysilylverbindungen genannt wie Vinyltrimethoxysilan, Methyltrimethoxysilan, i-Butyltrimethoxysilan, Hexadecyltrimethoxysilan.

Zusätzlich können als Haftvermittler die bekannten funktionellen Silane wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane den erfindungsgemäßen alkoxysilanfunktionellen Schmelzklebstoffen zugesetzt werden.

Die erfmdungsgemäßen Zusammensetzungen können als Klebstoffe vielfältig eingesetzt werden, beispielsweise als Montageklebstoff zur vorläufigen Fixierung von Bauteilen, als Buchbindeklebstoff oder Klebstoffe für die Herstellung von Kreuzbodenventilsäcken, Verbundfolien oder Laminaten oder als Kantenumleimer und als Klebstoffe in der Automobilindustrie zum Verkleben von Blechen miteinander oder z.B. mit Glas und Kunststoffen.

Ein weiterer Gegenstand der Erfindung ist somit die Verwendung der erfindungsgemäßen feuchtereaktiven, alkoxysilanfunktionellen Polyurethan-Prepolymere als Klebstoffe. Einen weiteren Gegenstand der Erfindung bilden Substrate, die unter Verwendung der erfindungsgemäßen Zusammensetzungen bzw. Klebstoffe verklebt wurden.

Die Verarbeitung der feuchtehärtenden, alkoxysilanfunktionellen Polyurethan-Schmelzklebstoffe erfolgt in einer dem Fachmann bekannten Art und Weise. Die Applikation erfolgt vorzugsweise bei erhöhter Temperatur, wobei die reaktiven Schmelzklebstoffe kontinuierlich oder diskontinuierlich z.B. bei Temperaturen von 80°C bis 180°C aufgeschmolzen werden und die Schmelze z.B. durch Sprüh- oder Walzenauftrag mit den zu verklebenden Substraten in Kontakt gebracht wird. Dabei wird der feuchtehärtenden, alkoxysilanfunktionellen Polyurethan-Schmelzklebstoff wenigstens auf eine Oberfläche der zu verklebenden Substrate aufgebracht. Die zu verklebenden Teile können dann sofort unter Druck zusammengefügt werden.

### Beispiele:

### Polyester A (bei Raumtemperatur festes, zumindest teilweise kristallines Polyesterpolyol):

Polyesterpolyol auf Basis von Adipinsäure und 1,6-Hexandiol mit einer Hydroxylzahl von etwa 30 mg KOH/g und einer Säurezahl von_ etwa 0,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester B (bei Raumtemperatur festes, zumindest teilweise kristallines Polyesterpolyol):

Polyesterpolyol auf Basis von Dodecandisäure und 1,6-Hexandiol mit einer Hydroxylzahl von etwa 30 mg KOH/g und einer Säurezahl von etwa 0,8 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester C (bei Raumtemperatur festes, amorphes Polyesterpolyol):

### Polyesterpolyol mit folgender Zusammensetzung

| | Gewichtsanteil am Polyester in % |
|---|---|
| Ethylenglykol | ca. 15,3 |
| Neopentylglykol | ca. 10,3 |
| 3-Hydroxy-2,2-dimethylpropyl- | ca. 21,0 |
| 3-hydroxy-2,2-dimethylpropanoat | |
| Adipinsäure | ca. 6,0 |
| Isophthalsäure | ca. 20,7 |
| Terephthalsäure | ca. 26,7 |

und einer Hydroxylzahl von etwa 34,7 mg KOH/g und einer Säurezahl von etwa 1,2 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyester D (bei Raumtemperatur flüssiges Polyesterpolyol):

Polyesterpolyol mit folgender Zusammensetzung

| | Gewichtsanteil am Polyester in % |
|---|---|
| Ethylenglykol | ca. 17,0 |
| 1,6-Hexandiol | ca. 19,5 |
| Neopentylglykol | ca. 8,1 |
| Adipinsäure | ca. 55,4 |

und einer Hydroxylzahl von etwa 22 mg KOH/g und einer Säurezahl von etwa 1,5 mg KOH/g. Die Herstellung erfolgt in einer dem Fachmann bekannten Art und Weise und ist z.B. beschrieben in Ullmanns Enzyklopädie der technischen Chemie, "Polyester", 4. Auflage, Verlag Chemie, Weinheim, 1980.

### Polyether E:

Polypropylenoxid mit einer Hydroxylzahl von etwa 56 mg KOH/g.

Der Polyether wird auf allgemein bekannte Weise KOH-katalytisch hergestellt, z.B. nach L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff.

### Katalysator A-1:

Bis-(N,N'-dimethylaminoethyl)ether, erhältlich z.B. von Huntsman Belgium BVBA, Everberg unter der Bezeichnung JEFFCAT® ZF-20.

### DMDEE:

2,2'-Dimorpholinodiethylether, erhältlich z.B. von Air Products Nederland B.V., Utrecht unter der Bezeichnung DABCO® DMDEE.

### DBTL:

Dibutylzinndilaurat, erhältlich z.B. von OSi Specialties unter der Bezeichung Fomrez® SUL-4.

### DBU:

1,8-Diazabicyclo[5.4.0]-undec-7-en, erhältlich bei Merck KGaA, Darmstadt.

### DBN:

1,5-Diazabicyclo[4.3.0]non-5-en, erhältlich bei Merck KGaA, Darmstadt.

### Beispiel 1 (erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,99 % ermittelt (Theorie: 2,04 %). Nun wird die dem NCO-Gehalt äquivalente Menge von 148,46 g (0,422 mol) N-(3-Trimethoxysilylpropyl)asparaginsäure-diethylester (hergestellt gemäß EP-A 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% Katalysator A-1 als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Beispiel 2 (erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 2,00 % ermittelt (Theorie: 2,04 %). Nun wird die dem NCO-Gehalt äquivalente Menge von 76,28 g (0,425 mol) 3-(Trimethoxysilyl)-propylamin (Merck KgaA, Darmstadt) langsam, in die mit Stickstoff gespülte Apparatur, so zugetropft, dass sich die Temperatur möglichst nicht stärker als um 10°C erhöht. Nachdem die gesamte Menge an 3-(Trimethoxysilyl)-propylamin zugetropft wurde, wird noch ca. eine halbe Stunde bei 130°C nachgerührt. Danach werden 0,5 Gew-.% Katalysator A-1 als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Beispiel 3 (erfindungsgemäß):

In einem 2L-Planschliffbecher werden 738,78 g (0,191 mol) des Polyesters A und 316,62 g (0,098 mol) des Polyesters C vorgelegt, bei 130°C aufgeschmolzen und dann 1 h bei 130°C und 30 mbar (+/- 10 mbar) Unterdruck entwässert. Anschließend gibt man 144,6 g (0,578 mol) 4,4'-Diisocyanatodiphenylmethan (Desmodur^{(R)} 44 M, Bayer AG, Leverkusen) hinzu. Nach einer Einrührzeit von 30 min wird ein NCO-Gehalt von 1,95 % ermittelt (Theorie: 2,02 %). Nun wird die dem NCO-Gehalt äquivalente Menge von 145,38 g (0,414 mol) N-(3-Trimethoxysilylpropyl)-asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% Katalysator A-1 als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Die Kartuschen werden für 4h bei 100°C im Umlufttrockenschrank getempert.

### Beispiel 4 (erfindungsgemäß):

In einem 2L-Planschliffbecher werden 425,67 g (0,110 mol) des Polyesters A, 319,25 g (0,099 mol) des Polyesters C und 319,25 g (0,063 mol) des Polyesters D vorgelegt, bei 130°C aufgeschmolzen und dann 1 h bei 130°C und 30 mbar (+/- 10 mbar) Unterdruck entwässert. Anschließend gibt man 135,83 g (0,543 mol) 4,4'-Diisocyanatodiphenylmethan (Desmodur®44 M, Bayer AG, Leverkusen) hinzu. Nach einer Einrührzeit von 30 min wird ein NCO-Gehalt von 1,90 % ermittelt (Theorie: 1,90 %). Nun wird die dem NCO-Gehalt äquivalente Menge von 141,12 g (0,402 mol) N-(3-Trimethoxysilylpropyl)asparaginsäure-diethylester (hergestellt gemäß EP-A 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% Katalysator A-1 als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Die Kartuschen werden für 4h bei 100°C im Umlufttrockenschrank getempert.

### Beispiel 5 (erfindungsgemäß):

In einem 2L-Planschliffbecher werden 831,82 g (0,215 mol) des Polyesters A und 207,95 g (0,105 mol) des Polyethers E vorgelegt, bei 130°C aufgeschmolzen und dann 1 h bei 130°C und 30 mbar (+/- 10 mbar) Unterdruck entwässert. Anschließend gibt man 160,23 g (0,640 mol) 4,4'-Diisocyanatodiphenylmethan (Desmodur® 44 M, Bayer AG, Leverkusen) hinzu. Nach einer Einrührzeit von 30 min wird ein NCO-Gehalt von 2,26 % ermittelt (Theorie: 2,24 %). Nun wird die dem NCO-Gehalt äquivalente Menge von 168,77 g (0,480 mol) N-(3-Trimethoxysilylpropyl)-asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% Katalysator A-1 als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Die Kartuschen werden für 4h bei 100°C im Umlufttrockenschrank getempert.

### Beispiel 6 (erfindungsgemäß):

In einem 2L-Planschliffbecher werden 422,76 g (0,109 mol) des Polyesters A, 317,07 g (0,098 mol) des Polyesters C und 317,07 g (0,079 mol) des Polyesters B vorgelegt, bei 130°C aufgeschmolzen und dann 1 h bei 130°C und 30 mbar (+/- 10 mbar) Unterdruck entwässert. Anschließend gibt man 143,11 g (0,572 mol) 4,4'-Diisocyanatodiphenylmethan (Desmodur® 44 M, Bayer AG, Leverkusen) hinzu. Nach einer Einrührzeit von 30 min wird ein NCO-Gehalt von 2,02 % ermittelt (Theorie: 2,00 %). Nun wird die dem NCO-Gehalt äquivalente Menge von 149,32 g (0,425 mol) N-(3-Trimethoxysilylpropyl)asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% Katalysator A-1 als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Die Kartuschen werden für 4h bei 100°C im Umlufttrockenschrank getempert.

### Vergleichsbeispiel 1 (nicht erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,98 % ermittelt (Theorie: 2,04 %). Nun wird die dem NCO-Gehalt äquivalente Menge von 147,27 g (0,419 mol) N-(3-Trimethoxysilylpropyl)asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach wird der Ansatz in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Vergleichsbeispiel 2 (nicht erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,99 % ermittelt (Theorie: 2,04 %). Nun wird die dem NCO-Gehalt äquivalente Menge von 75,67 g (0,422 mol) 3-(Trimethoxysilyl)-propylamin (Merck KgaA, Darmstadt) langsam, in die mit Stickstoff gespülte Apparatur, so zugetropft, dass sich die Temperatur möglichst nicht stärker als um 10°C erhöht. Nachdem die gesamte Menge an 3-(Trimethoxysilyl)-propylamin zugetropft wurde, wird noch ca. eine halbe Stunde bei 130°C nachgerührt. Danach wird der Ansatz in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Vergleichsbeispiel 3 (nicht erfindungsgemäß):

In einem 2L-Planschliffbecher werden 1062,53 g (0,275 mol) des Polyesters A vorgelegt, bei 130°C aufgeschmolzen und dann 1 h bei 130°C und 30 mbar (+/- 10 mbar) Unterdruck entwässert.
Anschließend gibt man 137,47 g (0,549 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,86 % ermittelt (Theorie: 1,92 %). Nun wird die dem NCO-Gehalt äquivalente Menge von 138,89 g (0,395 mol) N-(3-Trimethoxysilylpropyl)asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% DBTL als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Vergleichsbeispiel 4 (nicht erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,91 % ermittelt (Theorie: 2,04 %). Nun wird die dem NCO-Gehalt äquivalente Menge von 142,46 g (0,406 mol) N-(3-Trimethoxysilylpropyl)asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% DBU (50 % in Ethylacetat) als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Vergleichsbeispiel 5 (nicht erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,99 % ermittelt (Theorie: 2,04 %). Nun wird die dem NCO-Gehalt äquivalente Menge von 148,46 g (0,422 mol) N-(3-Trimethoxysilylpropyl)asparaginsäure-diethylester (hergestellt gemäß EP-A 0 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% DBN als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Vergleichsbeispiel 6 (nicht erfindungsgemäß):

In einem 2L-Planschliffbecher werden 1053,78 g (0,292 mol) des Polyesters A vorgelegt, bei 130°C aufgeschmolzen und dann 1 h bei 130°C und 30 mbar (+/- 10 mbar) Unterdruck entwässert. Anschließend gibt man 146,22 g (0,584 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,95 % ermittelt (Theorie: 2,04 %). Das Produkt wird in Alukartuschen mit jeweils ca. 150 g Füllgewicht abgefüllt und diese Luftdicht verschlossen. Die Kartuschen werden für 4h bei 100°C im Umlufttrockenschrank getempert.

### Vergleichsbeispiel 7 (nicht erfindungsgemäß):

In einem 2L-Planschliffbecher werden 790,34 g (0,219 mol) des Polyesters A vorgelegt, bei 130°C aufgeschmolzen und dann 1 h bei 130°C und 30 mbar (+/- 10 mbar) Unterdruck entwässert. Anschließend gibt man 109,5 g (0,438 mol) 4,4'-Diisocyanatodiphenylmethan (Desmodur® 44 M, Bayer AG, Leverkusen) hinzu. Nach einer Einrührzeit von 30 min wird ein NCO-Gehalt von 1,99 % ermittelt (Theorie: 2,04 %). Nun wird die dem NCO-Gehalt äquivalente Menge von 148,46 g (0,422 mol) N-(3-Trimethoxysilylpropyl)asparaginsäure-diethylester (hergestellt gemäß EP-A 596 360, Beispiel 5) langsam, in die mit Stickstoff gespülte Apparatur, so zugetropft, dass sich die Temperatur möglichst nicht stärker als um 10°C erhöht. Nachdem die gesamte Menge an N-(3-Trimethoxysilylpropyl)asparaginsäure-diethylester zugetropft wurde, wird noch ca. eine halbe Stunde bei 130°C nachgerührt. Danach werden 0,5 Gew-.% DMDEE als Aushärtungskatalysator zugegeben. Der Ansatz wird gut homogenisiert und anschließend in Alukartuschen mit jeweils ca. 150 g Füllgewicht abgefüllt und diese Luftdicht verschlossen. Je eine dieser Kartuschen wird für 4h, 24h, 48h bzw. 72h bei 100°C im Umlufttrockenschrank gelagert. An diesen Proben wird die Viskosität nach Wärmelagerung ermittelt. Die übrigen Kartuschen werden für 4h bei 100°C im Umlufttrockenschrank getempert. An diesen Proben erfolgen die übrigen Ausprüfungen.

### Bestimmung der Lagerstabilität der silanfunktionellen feuchtehärtenden PUR-Hotmelts:

Die Luftdicht verschlossenen Alukartuschen werden nach einer Lagerzeit von 4h, 24h, 48h bzw. 72h aus dem Trockenschrank entnommen und es wird die Viskosität bei einer Messtemperatur von 100°C mit Hilfe des Rotationsviskosimeters Viskotester VT 550 der Fa. Haake mit dem Messbecher SV und der Messeinrichtung SV DIN 2 bestimmt. Die Ergebnisse sind in Tabelle 1 zusammengefasst.

Wie die Ergebnisse zeigen, sind die lewis-saure metallorganische Katalysatoren des Stands der Technik (Vergleichsbeispiel 3) enthaltenden Schmelzklebstoff-Formulierungen auf der Basis von Polyesterpolyolen nicht temperaturstabil. Nach einer Lagerung von 24 Stunden bei 100°C ist die Viskosität auf etwa die Hälfte der Viskosität des unkatalysierten Vergleichsbeispiels 1 abgesunken. Nach 48 bzw. 72 Stunden beträgt die Viskosität nur noch etwa 25 % der unkatalysierten Probe. Diese Viskositätsabnahme kann auf den irreversiblen Abbau der Polyesterketten durch Umesterungsreaktionen mit dem aus den Alkoxysilan-Endgruppen abgespalten Alkohol (hier Methanol) zurückgeführt werden. Die mit den stark basischen bicyclischen tertiären Aminkatalysatoren (DBU und DBN) des Stands der Technik (Vergleichsbeispiele 4 und 5) hergestellten Schmelzkleber sind ebenfalls nicht temperaturstabil. Selbst bei einer sehr kurzen Wärmeeinwirkung von 100°C über 4 Stunden sinkt die Viskosität dieser Formulierungen im Vergleich zu dem Vergleichsprodukt ohne Katalysator (Vergleichsbeispiel 1) auf die Hälfte ab. Bei längerer Temperatureinwirkung ist die Viskosiätsabsenkung noch dramatischer. Auch hier wird die Viskosiätsabsenkung durch einen irreversiblen Abbau der Polyesterketten der Alkoxysilan-Endgruppen aufweisenden Polyurethan-Prepolymeren verursacht, wodurch der Schmelzkleber unbrauchbar wird.

Die erfindungsgemäßen Schmelzklebstoffe mit dem tertiären Aminkatalysator Katalysator A-1 (Beispiel 1) hingegen weisen eine exzellente Lagerstabilität unter Temperaturbelastung auf. Die Viskosität nimmt im Vergleich zu dem unkatalysierten Vergleichsbeispiel 1 auch nach einer Lagerdauer von 72 Stunden bei 100°C nur unwesentlich ab. Mit diesen Schmelzklebern lassen sich auch nach Wärmelagerung ausgezeichnete Klebverbindungen herstellen.

### Bestimmung der Wärmestandsfestigkeit:

Zur Herstellung der Prüfkörper werden Buchenholzplatten der Größe 40 x 20 x 5 mm, die bei 23°C und 50 % rel. Feuchte gelagert werden, verwendet. Die Kartusche mit dem zu charakterisierenden Produkt wird 45 Minuten bei 120°C im Umlufttrockenschrank aufgeschmolzen und der Inhalt anschließend mit Hilfe einer Kartuschenpistole als Klebstoffraupe auf die in einer speziellen Form eingespannten Holzprüfkörper aufgetragen. Anschließend wird die Form fest verschlossen. Die Form garantiert eine Überlappungslänge von 10 mm, eine Klebfläche von 2 cm² und eine Klebfugendicke von 0,8 mm. Die Probenkörper werden nach 24 Stunden Lagerung bei 23°C und 50 % rel. Feuchte aus der Form entfernt und anschließend weitere 14 Tage bei 23 °C und 50 % rel. Feuchte gelagert. Danach erfolgt die Wärmestands-Messung anhand von jeweils 5 Prüfkörpern. Dazu werden die Prüfkörper in einen Trockenschrank gehängt und mit einem 2500 g schweren Gewicht belastet. Die Starttemperatur beträgt 40°C. Nach 20 Minuten wird die Temperatur konstant um 0,5°C / Min. bis auf 200 °C erhöht. Wenn es zu vollständigen Ablösen der Fügeteile kommt, wird die zum Zeitpunkt des Bruches im Trockenschrank vorliegende Temperatur erfasst. Die Ergebnisse sind in Tabelle 2 zusammengefasst.

Wie die Daten der Tabelle 2 zeigen, besitzt der Alkoxysilan-Endgruppen aufweisende erfindungsgemäße Schmelzklebstoff des Beispiels 1 eine im Vergleich zu konventionellen reaktiven Polyurethan-Hotmelts (Vergleichsbeispiel 6) ausgezeichnete Wärmestandsfestigkeit.

Auch die Messung der Wärmestandsfestigkeit zeigt, dass lewis-saure metallorganische Katalysatoren des Stands der Technik (Vergleichsbeispiel 3) enthaltenden Schmelzklebstoff-Formulierungen auf der Basis von Polyesterpolyolen nicht stabil sind. Das DBTL als Aushärtungskatalysator enthaltende Produkt (Vergleichsbeispiel 3) weist eine Wärmestandsfestigkeit von nur 100°C auf, was auf den irreversiblen Abbau der Polyesterketten durch Umesterungsreaktionen mit dem aus den Alkoxysilan-Endgruppen abgespalten Alkohol (hier Methanol) zurückgeführt werden kann. Der erfindungsgemäße Schmelzklebstoff des Beispiels 1 hingegen besitzt eine Wärmestandsfestigkeit von über 200°C, da hier keine Umesterungsreaktionen auftreten und der Klebstoff nicht irreversibel geschädigt wird.

### Bestimmung der Zugscherfestigkeit von Buchenholz-Verklebungen:

Zur Herstellung der Prüfkörper werden Buchenholzplatten der Größe 40 x 20 x 5 mm, die bei 23°C und 50 % rel. Feuchte gelagert werden, verwendet. Die Kartusche mit dem zu charakterisierenden Produkt wird 45 Minuten bei 120°C im Umlufttrockenschrank aufgeschmolzen und der Inhalt anschließend mit Hilfe einer Kartuschenpistole als Klebstoffraupe auf die in einer speziellen Form eingespannten Holzprüfkörper aufgetragen. Anschließend wird die Form fest verschlossen. Die Form garantiert eine Überlappungslänge von 10 mm, eine Klebfläche von 2 cm² und eine Klebfugendicke von 0,8 mm. Die Prüfkörper werden nach ca. 30 Minuten aus der Form genommen und anschließend bei 23°C und 50 % rel. Feuchte bis zur Ausprüfung gelagert. Die Ausprüfungen erfolgen nach 1 Stunde, 2 Stunden, 1 Tag, 7 Tagen, 14 Tagen und 28 Tagen. Von jedem Produkt werden 5 Prüfkörper hergestellt, vermessen und die Einzelergebnisse gemittelt. Die Ergebnisse sind in der Tabelle 3 zusammengefasst.

### Bestimmung der Schälfestigkeit von Buchenholz / PVC - Verklebungen:

Zur Herstellung der Prüfkörper werden Buchenholzplatten der Größe 30 x 120 x 4,0 mm, die bei 23°C und 50 % rel. Feuchte gelagert werden, sowie Hart-PVC-Kaschierfolie (Benelitfolie RTF) mit den Abmessungen 30 x 210 x 0,4 mm verwendet. Die Kartusche mit dem zu charakterisierenden Produkt wird 45 Minuten bei 120°C im Umlufttrockenschrank aufgeschmolzen und der Inhalt anschließend mit Hilfe einer Kartuschenpistole als Klebstoffraupe auf das obere Ende der Holzprüfkörper aufgetragen. Anschließend wird der Klebstoffe mittels eines Rakels (Rillenrakel, 150 µm) auf dem Buchenholzprüfkörper verteilt. Die Klebfläche beträgt ca. 30 x 90 mm. Nach einer Abkühlzeit von 2 Minuten bei Raumtemperatur wird die PVC-Folie so auf den Buchenholzprüfkörper gelegt, dass die nicht strukturierte Seite der Hart-PVC-Kaschierfolie auf der mit Klebstoff beschichteten Seite des Buchenholzprüfkörpers bündig anliegt. Dieser Verbund wird nun mit der Buchenholzseite nach unten in einer Membranpresse für 10 s bei ca. 1,5 bar effektivem Druck und einer Temperatur von 105°C verpresst. Von jedem Produkt werden 3 Prüfkörper hergestellt, vermessen und die Einzelergebnisse gemittelt. Die Ausprüfungen erfolgen nach 1 Stunde, 2 Stunden, 1 Tag, 7 Tagen, 14 Tagen und 28 Tagen. Die Ergebnisse sind in der Tabelle 4 zusammengefasst.

Wie die in den Tabellen 3 und 4 zusammengefassten Ergebnisse der Buchenholz- sowie der Buchenholz/Hart-PVC-Verklebungen zeigen, härten die unkatalysierten silanfunktionellen Schmelzkleber nur sehr langsam aus und bauen erst nach mehreren Wochen Festigkeit der Klebverbindung auf (Vergleichsbeispiele 1 und 2). Die erzielbare Endfestigkeit liegt allerdings deutlich unter dem Niveau das mit konventionellen isocyanatfunktionellen Polyurethan-Holtmelts erreicht wird (Vergleichsbeispiel 6). Die den Katalysator A-1 enthaltenden erfindungsgemäßen Schmelzkleber auf der Basis eines kristallisierenden Polyesterpolyols (Beispiele 1 und 2) hingegen weisen im Fall der Buchenholzverklebung bereits nach 1 Stunde eine ausreichende Anfangsfestigkeit auf. Im Fall der Buchenholz/Hart-PVC-Verklebung wird nach 1 Tag eine ausreichende Anfangsfestigkeit erreicht. Durch erfindungsgemäße Modifikation der Schmelzkleber durch Mitverwendung eines weiteren kristallisierenden Polyesters oder von amorphen Polyestern oder von bei Raumtemperatur flüssigen Polyestern sowie durch Zumischen eines Polyetherpolyols lassen sich die erzielbaren Festigkeiten stark erhöhen, so dass auch im Fall der Buchenholz/Hart-PVC-Verklebung bereits nach 1 Stunde eine ausreichende Anfangsfestigkeit erhalten werden kann.

Die Endfestigkeiten (gemessen nach 7 - 28 Tagen) der Klebverbindungen die mit den erfindungsgemäßen Alkoxysilan-Endgruppen und den Katalysator A-1 aufweisenden Polyurethan-Schmelzklebern hergestellt wurden liegen auf dem gleichen Niveau wie die Festigkeiten die sich mit konventionellen isocyanatfunktionellen Polyurethan-Hotmelts (Vergleichsbeispiel 6) erzielen lassen.

Auch die Zugscherfestigkeiten der Buchenholzverklebungen zeigen, dass lewis-saure metallorganische Verbindungen wie z.B. DBTL nicht als Katalysatoren für die Aushärtung von Alkoxysilan-Endgruppen aufweisenden Schmelzklebern auf der Basis von Polyesterpolyolen geeignet sind (Vergleichsbeispiel 3). Die Anfangsfestigkeiten liegen signifikant unter denen der erfindungsgemäßen Zusammensetzungen. Außerdem zeigt sich, dass bei längerer Wärmelagerung die erzielbaren Festigkeiten deutlich kleiner werden, was auf den irreversiblen Abbau der Polyesterketten durch Umesterungsreaktionen mit dem aus den Alkoxysilan-Endgruppen abgespalten Alkohol (hier Methanol) zurückgeführt werden kann.

Bei der Verwendung von DMDEE als Aushärtungskatalysator (Vergleichsbeispiel 7) wird zwar eine im Vergleich zu dem unkatalysierten Schmelzkleber erhöhte Anfangsfestigkeit (gemessen nach 1 bzw. 2 Stunden) erzielt, die Endfestigkeiten (gemessen nach 7 - 28 Tagen) liegen dagegen auf dem Niveau des unkatalysierten Schmelzklebers (Vergleichsbeispiel 1) und damit deutlich unterhalb der Werte die mit dem erfindungsgemäßen alkoxysilanfunktionellen Schmelzkleber der den Katalysator A-1 enthält erhalten werden (Beispiele 1 und 2).

**Tabelle 1: Viskositäten in mPa*s für die verschiedenen Beispiele und Vergleichsbeispiele gemessen bei 100°C nach der Lagerung im Umlufttrockenschrank bei 100°C für die angegebene Dauer.**

| **Beispiel - Nr.** | **Katalysator** | **Viskosität in mPa*s gemessen bei 100 °C nach einer Lagerung bei 100 °C für eine Dauer von** | | | |
|---|---|---|---|---|---|
| | | **4h** | **24h** | **48h** | **72h** |
| Beispiel 1 | A1 | 17750 | 16350 | 15100 | 13900 |
| Beispiel 2 | A1 | 42150 | 39700 | 37900 | 37350 |
| Vergleichsbeispiel 1 | ohne | 20900 | 14150 | 17350 | 16400 |
| Vergleichsbeispiel 2 | ohne | 52850 | 47700 | 47000 | 44750 |
| Vergleichsbeispiel 3 | DBTL | 27100 | 7445 | 3725 | 3410 |
| Vergleichsbeispiel 4 | DBU | 9215 | 3760 | 2350 | 2420 |
| Vergleichsbeispiel 5 | DBN | 11200 | 4990 | 3060 | 2620 |

**Tabelle 2: Wärmestandsfestigkeit für ein silanfunktionelles feuchtehärtendes PUR-Hotmelt mit Katalysator A-1 als Aushärtungskatalysator (Beispiel 1), ein isocyanatfunktionelles reaktives PUR-Hotmelt (Vergleichsbeispiel 6) und ein silanfunktionelles feuchtehärtendes PUR-Hotmelt mit DBTL als Aushärtungskatalysator (Vergleichsbeispiel 3).**

| **Beispiel - Nr.** | **Wärmestandsfestigkeit** |
|---|---|
| Beispiel 1 | > 200 °C |
| Vergleichsbeispiel 6 | 180 °C |
| Vergleichsbeispiel 3 | 100 °C |

**Tabelle 3: Zugscherfestigkeiten von Buchenholzverklebungen in N / mm² nach Aushärtung bei 23°C und 50 % rel. Feuchte und verschiedenen Aushärtezeiten.**

| **Beispiel-Nr.** | **Katalysator** | **Lagerzeit bei 100 °C in h** | **Zugscherfestigkeit in N / mm² nach einer Aushärtezeit von** | | | | | |
|---|---|---|---|---|---|---|---|---|
| | | | **1 Stunde** | **2 Stunden** | **1 Tag** | **7 Tagen** | **14 Tagen** | **28 Tagen** |
| Vergleichsbeispiel 1 | ohne | 4 | 0,4 | 1,1 | 2,9 | 4,8 | 6,6 | 8,9 |
| Beispiel 1 | A-1 | 4 | 2,6 | 3,1 | 6,5 | 11,9 | 11,7 | 11,4 |
| Beispiel 2 | A-1 | 4 | 6,0 | 6,3 | 9,8 | 11,5 | 12,2 | 12,2 |
| Beispiel 3 | A-1 | 4 | 3,4 | 4,1 | 5,0 | 6,8 | 9,4 | 9,2 |
| Beispiel 4 | A-1 | 4 | 1,0 | 1,1 | 1,6 | 4,1 | 5,8 | 7,0 |
| Beispiel 5 | A-1 | 4 | 0,4 | 0,7 | 1,8 | 5,6 | 6,8 | 8,2 |
| Beispiel 6 | A-1 | 4 | 4,2 | 4,9 | 5,8 | 8,7 | 9,8 | 11,8 |
| Vergleichsbeispiel 3 | DBTL | 4 | 1,3 | 1,6 | 4,3 | 7,9 | 7,5 | 7,9 |
| Vergleichsbeispiel 3 | DBTL | 72 | 0,7 | 0,4 | 1,5 | 2,9 | 4,2 | 4,5 |
| Vergleichsbeispiel 6 | ohne | 4 | 6,4 | 7,3 | 10,2 | 11,9 | 13,0 | nicht bestimmt |
| Vergleichsbeispiel 7 | DMDEE | 4 | 2,4 | 2,6 | nicht bestimmt | 7,3 | 8,8 | 8,9 |

**Tabelle 4: Schälfestigkeiten von Buchenholz / PVC - Verklebungen in N / mm nach Aushärtung bei 23°C und 50 % rel. Feuchte und verschiedenen Aushärtezeiten.**

| **Beispiel - Nr.** | **Katalysator** | **Schälfestigkeit in N / mm nach einer Aushärtezeit von** | | | | | |
|---|---|---|---|---|---|---|---|
| | | **1 Stunde** | **2 Stunden** | **1 Tag** | **7 Tagen** | **14 Tagen** | **28 Tagen** |
| Vergleichsbeispiel 2 | ohne | 0,1 | 0,1 | 0,42 | 2,20 + 1 x Folienabriss | 3,74 | Folienabriss |
| Beispiel 2 | A-1 | 0,09 | 0,21 | 3,26 | Folienabriss | Folienabriss | Folienabriss |
| Beispiel 3 | A-1 | 2,23 + 2 x Folienabriss | 1,12 + 2 x Folienabriss | Folienabriss | Folienabriss | Folienabriss | Folienabriss |
| Beispiel 4 | A-1 | 1,49 | 1,17 | 2,74 | 4,99 | 4,88 Holz fasert | 5,27 Holz fasert |
| Beispiel 6 | A-1 | 2,88 | 2,77 | Folienabriss | Folienabriss | Folienabriss | Folienabriss |

## Patentansprüche

1. Alkoxysilanfunktionelle Zusammensetzung, erhältlich durch Umsetzung von
A) Polyurethanprepolymeren, erhältlich durch Umsetzung von
i) mindestens einem aromatischen, aliphatischen, araliphatischen und/oder cycloaliphatischen Diisocyanat
mit
ii) mindestens einem Polyol, enthaltend mindestens ein lineares bei Raumtemperatur festes Polyesterpolyol,
wobei das Mengenverhältnis von i) zu ii) so gewählt wird, dass das molare Verhältnis von NCO zu OH von 1,2 bis 4,0 beträgt
mit
B) Alkoxysilan- und Amino- oder Mercaptogruppen aufweisenden Verbindungen der allgemeinen Formel (I) 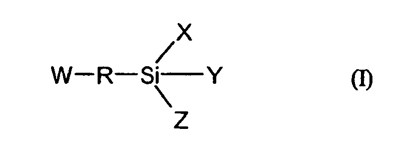 in welcher
X, Y, Z für gleiche oder verschiedene geradkettige oder verzweigte (C₁-C₈)Alkylreste oder cyclische (C₃-C₈)Alkylreste oder (C₁-C₈)Alkoxyreste stehen, mit der Maßgabe, dass mindestens einer der Reste ein (C₁-C₈)Alkoxyrest ist,
R für geradkettige oder verzweigte Alkylenreste mit 1 bis 8 Kohlenstoffatomen oder cyclische Alkylenreste mit 3 bis 8 Kohlenstoffatomen steht
W entweder für -SH oder für NH-R'steht,
wobei
R' für Wasserstoff, geradkettige oder verzweigte Alkylreste mit 1 bis 8 Kohlenstoffatomen oder cyclische Alkylreste mit 3 bis 8 Kohlenstoffatomen oder Arylreste oder Reste der allgemeinen Formel (II) steht, 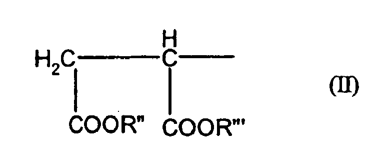 wobei
R" und R'" für gleiche oder verschiedene, geradkettige oder verzweigte Alkylreste mit 1 bis 8 Kohlenstoffatomen oder cyclische Alkylreste mit 3 bis 8 Kohlenstoffatomen stehen,
wobei das Mengenverhältnis von A) zu B) so gewählt wird, dass pro Mol NCO-Gruppen aus A) 0,95 bis 1,1 Mol Amino- oder Mercaptogruppen aus B) eingesetzt werden, und Zugabe von
C) Bis-(N,N'-dimethylaminoethyl)ether.

2. Zusammensetzung nach Anspruch 1, worin der Bis-(N,N'-dimethylaminoethyl)ether in einer Menge von 0,1 Gew.-% bis 1,5 Gew.-% bezogen auf das Umsetzungsprodukt von A) mit B) eingesetzt wird.

3. Zusammensetzung nach Anspruch 1 oder 2, worin die Polykomponente A) ii) mindestens ein festes zumindest teilkristallines Polyesterpolyol enthält.

4. Zusammensetzung nach Anspruch 1, 2 oder 3, worin die Polyolkomponente mindestens ein festes, amorphes, lineares Polyesterpolyol enthält.

5. Zusammensetzung nach Anspruch 1, 2, 3 oder 4, worin die Polyolkomponente A) ii) zusätzlich ein oder mehrere bei Raumtemperatur flüssige, lineare Polyesterpolyole und/oder ein oder mehrere lineare Polyetherpolyole enthält.

6. Verfahren zur Herstellung der alkoxysilanfunktionelle Zusammensetzungen gemäß einem der Ansprüche 1 bis 5, durch Herstellen von
A) Polyurethanprepolymeren durch Umsetzung von
i) mindestens einem aromatischen, aliphatischen, araliphatischen und/oder cycloaliphatischen Diisocyanat
mit
ii) mindestens einem Polyol, enthaltend mindestens ein lineares bei Raumtemperatur festes Polyesterpolyol
wobei das Verhältnis von i) zu ii) so gewählt wird, dass das molare Verhältnis von NCO zu OH von 1,2 bis 4,0 beträgt
und Umsetzen des unter A) erhaltenen Polyurethanprepolymeren mit
B) Alkoxysilan- und Amino- oder Mercaptogruppen aufweisenden Verbindungen der allgemeinen Formel (I) 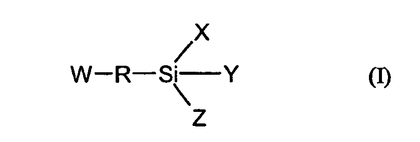 in welcher
X, Y, Z für gleiche oder verschiedene geradkettige oder verzweigte (C₁-C₈)Alkylreste oder cyclische (C₃-C₈)Alkylreste oder (C₁-C₈)Alkoxyreste stehen, mit der Maßgabe, dass mindestens einer der Reste ein (C₁-C₈)Alkoxyrest ist,
R für geradkettige oder verzweigte Alkylenreste mit 1 bis 8 Kohlenstoffatomen oder cyclische Alkylenreste mit 3 bis 8 Kohlenstoffatomen steht,
W entweder für -SH oder für -NH-R' steht,
wobei
R' für Wasserstoff, geradkettige oder verzweigte Alkylreste mit 1 bis 8 Kohlenstoffatomen, cyclische Alkylreste mit 3 bis 8 Kohlenstoffatomen, Arylreste oder Reste der allgemeinen Formel (II) steht, 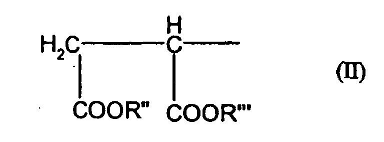 wobei
R" und R für gleiche oder verschiedene, geradkettige oder verzweigte Alkylreste mit 1 bis 8 Kohlenstoffatomen stehen oder cyclische Alkylreste mit 3 bis 8 Kohlenstoffatomen stehen,
wobei das Mengenverhältnis von A) zu B) so gewählt wird, dass pro Mol NCO-Gruppen aus A) 0,95 bis 1,1 Mol Amino- oder Mercaptogruppen aus B) eingesetzt werden, und anschließende Zugabe von
C) Bis-(N,N'-dimethylaminoethyl)ether.

7. Feuchthärtende, alkoxysilanfunktiorielle Schmelzklebstoff Zusammensetzung, enthaltend die Zusammensetzung gemäß einem der Ansprüche 1 bis 5 oder hergestellt nach Anspruch 6, gegebenenfalls zusammen mit einem oder mehreren für Schmelzklebstoffe üblichen Additiven.

8. Verwendung der Zusammensetzungen gemäß einem der Ansprüche 1 bis 5 oder hergestellt nach Anspruch 6 als Klebstoffe oder zu deren Herstellung.

9. Verwendung der feuchthärtenden Schmelzklebstoff-Zusammensetzung nach Anspruch 7 zum Verkleben von Substraten.

10. Substrate, verklebt unter Verwendung der Zusammensetzungen eines der Ansprüche 1 bis 5, oder der feuchthärtenden Schmelzklebstoff-Zusammensetzung nach Anspruch 7.

## Claims

1. Alkoxysilane-functional composition, obtainable by reaction of
A) polyurethane prepolymers obtainable by reaction of
i) at least one aromatic, aliphatic, araliphatic and/or cycloaliphatic diisocyanate
with
ii) at least one polyol comprising at least one linear polyester polyol which is solid at room temperature,
wherein the ratio of amounts of i) to ii) is chosen such that the molar ratio of NCO to OH is from 1.2 to 4.0,
with
B) compounds containing alkoxysilane and amino or mercapto groups, of the general formula (I) 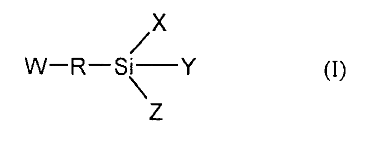 in which
X, Y and Z represent identical or different straight-chain or branched (C₁-C₈)alkyl radicals or cyclic (C₃-C₈)alkyl radicals or (C₁-C₈)alkoxy radicals, with the proviso that at least one of the radicals is a (C₁-C₈)alkoxy radical,
R represents straight-chain or branched alkylene radicals having 1 to 8 carbon atoms or cyclic alkylene radicals having 3 to 8 carbon atoms,
W represents either -SH or -NH-R'
wherein
R' represents hydrogen, straight-chain or branched alkyl radicals having 1 to 8 carbon atoms or cyclic alkyl radicals having 3 to 8 carbon atoms or aryl radicals or radicals of the general formula (II) 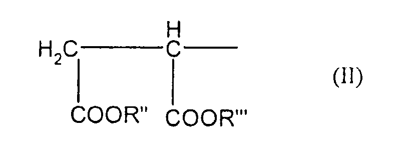 wherein
R" and R'" represent identical or different straight-chain or branched alkyl radicals having 1 to 8 carbon atoms or cyclic alkyl radicals having 3 to 8 carbon atoms
wherein the ratio of amounts of A) to B) is chosen such that 0.95 to 1.1 mol of amino or mercapto groups from B) are employed per mol of NCO groups from A), and addition of
C) bis-(N,N'-dimethylaminoethyl) ether.

2. Composition according to claim 1, wherein the bis-(N,N'-dimethylaminoethyl) ether is employed in an amount of 0.1 wt.% to 1.5 wt.%, based on the reaction product of A) with B).

3. Composition according to claim 1 or 2, wherein the polyol component A) ii) comprises at least one solid, at least partly crystalline polyester polyol.

4. Composition according to claim 1, 2 or 3, wherein the polyol component comprises at least one solid amorphous linear polyester polyol.

5. Composition according to claim 1, 2, 3 or 4, wherein the polyol component A) ii) additionally comprises one or more linear polyester polyols which are liquid at room temperature and/or one or more linear polyether polyols.

6. Process for the preparation of the alkoxysilane-functional compositions according to one of claims 1 to 5, by preparation of
A) polyurethane prepolymers by reaction of
i) at least one aromatic, aliphatic, araliphatic and/or cycloaliphatic diisocyanate
with
ii) at least one polyol comprising at least one linear polyester polyol which is solid at room temperature,
wherein the ratio of i) to ii) is chosen such that the molar ratio of NCO to OH is from 1.2 to 4.0,
and reaction of the polyurethane prepolymers obtained under A) with
B) compounds containing alkoxysilane and amino or mercapto groups, of the general formula (I) 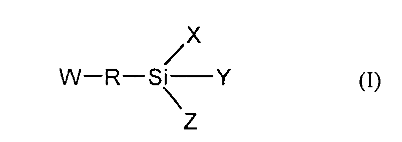 in which
X, Y and Z represent identical or different straight-chain or branched (C₁-C₈)alkyl radicals or cyclic (C₃-C₈)alkyl radicals or (C₁-C₈)alkoxy radicals, with the proviso that at least one of the radicals is a (C₁-C₈)alkoxy radical,
R represents straight-chain or branched alkylene radicals having 1 to 8 carbon atoms or cyclic alkylene radicals having 3 to 8 carbon atoms,
W represents either -SH or -NH-R'
wherein
R' represents hydrogen, straight-chain or branched alkyl radicals having 1 to 8 carbon atoms, cyclic alkyl radicals having 3 to 8 carbon atoms, aryl radicals or radicals of the general formula (II) 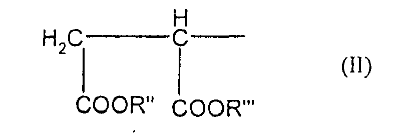 wherein
R" and R' " represent identical or different straight-chain or branched alkyl radicals having 1 to 8 carbon atoms or cyclic alkyl radicals having 3 to 8 carbon atoms
wherein the ratio of amounts of A) to B) is chosen such that 0.95 to 1.1 mol of amino or mercapto groups from B) are employed per mol of NCO groups from A), and subsequent addition of
C) bis-(N,N'-dimethylaminoethyl) ether.

7. Moisture-curing, alkoxysilane-functional hot-melt adhesive composition, comprising the composition according to one of claims 1 to 5 or prepared according to claim 6, optionally together with one or more conventional additives for hot-melt adhesives.

8. Use of the compositions according to one of claims 1 to 5 or prepared according to claim 6 as adhesives or for the preparation thereof.

9. Use of the moisture-curing hot-melt adhesive composition according to claim 7 for gluing substrates.

10. Substrates glued using the compositions of one of claims 1 to 5 or the moisture-curing hot-melt adhesive composition according to claim 7.

## Revendications

1. Composition à fonctions alcoxysilane, obtenue par réaction de
A) un prépolymère de polyuréthane lui-même obtenu par réaction de
i) au moins un diisocyanate aromatique, aliphatique, araliphatique et/ou cycloaliphatique
avec
ii) au moins un polyol contenant au moins un polyester-polyol linéaire solide à température ambiante,
les proportions relatives entre i) et ii) étant choisies en sorte que le rapport molaire entre les groupes NCO et les groupes OH aille de 1,2 à 4,0, avec
B) des composés à groupes alcoxysilane et amino ou mercapto, répondant à la formule générale (I) 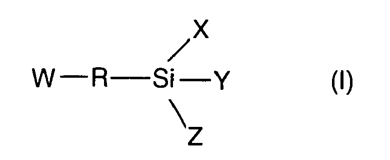 dans laquelle
X, Y, Z, ayant des significations identiques ou différentes, représentent chacun un groupe alkyle à chaîne droite ou ramifiée en C₁-C₈ ou un groupe alkyle cyclique en C₃-C₈ ou un groupe alcoxy en C₁-C₈, sous réserve que l'un au moins des groupes est un groupe alcoxy en C₁-C₈,
R représente un groupe alkylène à chaîne droite ou ramifiée en C₁-C₈ ou un groupe alkylène cyclique en C₃-C₈,
W représente -SH ou -NH-R',
R' représentant l'hydrogène, un groupe alkyle à chaîne droite ou ramifiée en C₁-C₈ ou un groupe alkyle cyclique en C₃-C₈ ou un groupe aryle ou un groupe de formule générale (II) 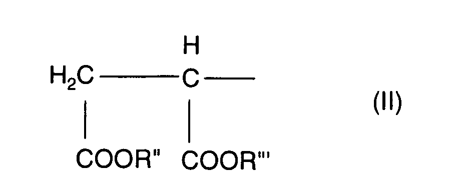 dans laquelle
R" et R"', ayant des significations identiques ou différentes, représentent chacun un groupe alkyle à chaîne droite ou ramifiée en C₁-C₈ ou un groupe alkyle cyclique en C₃-C₈,
les proportions relatives entre A) et B) étant choisies en sorte que, pour une mole de groupes NCO de A), on dispose de 0,95 à 1,1 mol de groupes amino ou mercapto de B), cette réaction étant suivie de l'addition de
C) l'éther bis-(N,N'-diméthylaminoéthylique).

2. Composition selon la revendication 1, pour laquelle l'éther bis-(N,N'-diméthylaminoéthylique) est mis en oeuvre en quantité de 0,1 à 1,5 % du poids du produit de réaction de A) avec B).

3. Composition selon la revendication 1 ou 2, dans laquelle le composant polyol A) ii) contient au moins un polyester-polyol solide cristallin en partie au moins.

4. Composition selon la revendication 1, 2 ou 3, dans laquelle le composant polyol contient au moins un polyester-polyol linéaire solide amorphe.

5. Composition selon la revendication 1, 2, 3 ou 4, dans laquelle le composant polyol A) ii) contient en outre un ou plusieurs polyester-polyols linéaires liquides à température ambiante et/ou un ou plusieurs polyéther-polyols linéaires.

6. Procédé pour la préparation des compositions à fonctions alcoxysilane selon l'une des revendications 1 à 5, selon lequel on prépare d'abord
A) un prépolymère de polyuréthane par réaction de
i) au moins un diisocyanate aromatique, aliphatique, araliphatique et/ou cycloaliphatique
avec
ii) au moins un polyol contenant au moins un polyester-polyol linéaire solide à température ambiante,
les proportions relatives entre i) et ii) étant choisies en sorte que le rapport molaire entre les groupes NCO et les groupes OH se situe entre 1,2 et 4,0,
puis on fait réagir le prépolymère de polyuréthane obtenu en A) avec
B) des composés à groupes alcoxysilane et amino ou mercapto de formule générale (I) 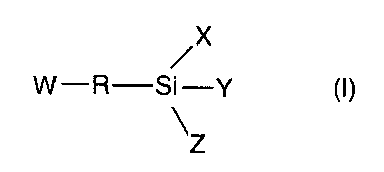 dans laquelle
X, Y, Z ayant des significations identiques ou différentes, représentent chacun un groupe alkyle à chaîne droite ou ramifiée en C₁-C₈ ou un groupe alkyle cyclique en C₃-C₈ ou un groupe alcoxy en C₁-C₈, sous réserve que l'un au moins des groupes est un groupe alcoxy en C₁-C₈,
R représente un groupe alkylène à chaîne droite ou ramifiée en C₁-C₈ ou un groupe alkylène cyclique en C₃-C₈,
W représente -SH ou -NH-R',
R' représentant l'hydrogène, un groupe alkyle à chaîne droite ou ramifiée en C₁-C₈, un groupe alkyle cyclique en C₃-C₈, un groupe aryle ou un groupe de formule générale (II) 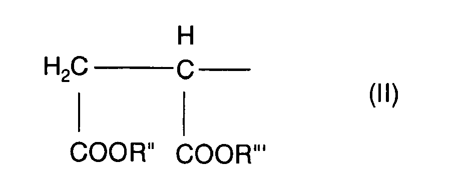 dans laquelle
R" et R"', ayant des significations identiques ou différentes, représentent chacun un groupe alkyle à chaîne droite ou ramifiée en C₁-C₈ ou un groupe alkyle cyclique en C₃-C₈,
les proportions relatives entre A) et B) étant choisies en sorte que, pour une mole de groupes NCO de A), on dispose de 0,95 à 1,1 mol de groupes amino ou mercapto de B), puis on ajoute
C) l'éther bis-(N,N'-diméthylaminoéthylique).

7. Composition de colle fusible à fonctions alcoxysilane, durcissant sous l'action de l'humidité, contenant la composition selon l'une des revendications 1 à 5 ou préparée selon la revendication 6, le cas échéant avec un ou plusieurs des additifs usuels pour les colles fusibles.

8. Utilisation des compositions selon l'une des revendications 1 à 5 ou préparées selon la revendication 6 en tant que colles ou pour la préparation de colles.

9. Utilisation de la composition de colle fusible durcissant sous l'action de l'humidité selon la revendication 7 pour le collage de substrats.

10. Substrats collés à l'aide des compositions de l'une des revendications 1 à 5 ou de la composition de colle fusible durcissant sous l'action de l'humidité selon la revendication 7.
